# EUROPEAN PATENT SPECIFICATION

(11) **EP 0 444 886 B1**
(45) Date of publication and mention of the grant of the patent: **11.12.1996**
(21) Application number: 91301554.1
(22) Date of filing: 26.02.1991
(51) Int. Cl.: G06F 3/06

(54) **Disk drive accessing system and method of accessing a disk drive**
Zugriffsverfahren und -system für eine Platteneinheit
Méthode et système d'accès pour unité de disque

(30) Priority: 28.02.1990 US 487026
(43) Date of publication of application: 04.09.1991
(73) Proprietor: SEAGATE TECHNOLOGY INTERNATIONAL, Georgetown Grand Cayman Island (KY)
(72) Inventor: Nissimov, Haim N., West Hills, California 91307 (US); Keays, Brady, Thousand Oaks, California 91362 (US)
(74) Representative: Kenyon, Sarah Elizabeth

(56) References cited:
- IBM TECHNICAL DISCLOSURE BULLETIN., vol.31, no.1, June 1988, NEW YORK US pages 299 - 300 'Automatic Configuration of Memory Options With Fault Bypassing'
- ELECTRONICS & WIRELESS WORLD, vol.95, no.1643, September 1988, SURREY GB pages 884 - 888 G. HUMPHREY 'SCSI-Small Computer System Interface'
- CHIP ZEITSCHRIFT FUER MIKROCOMPUTER-TECHNIK, no.1, January 1989, WURZBURG DE pages 141 - 148 T. VOGLER 'Schaltzentrum des PC'

## Description

The present invention relates to a disk drive accessing system and to a method for accessing a disk drive.

Hard disk data storage systems contain one or more magnetic disks on which data is stored in sectors which lie in concentric tracks on the disks. A transducer (or head) flies above a track and writes, or magnetically encodes, the data in a sector on the track. The head is also capable of reading the magnetically encoded data from the sectors.

An electro-mechanical actuator operates within a negative feed back, closed loop servo system. The actuator moves the head radially for track seek operations and holds the transducer directly over a track for track following operations.

Typically, a stack of disks is mounted on a spindle. Each surface on each magnetic disk has one corresponding head. All the heads are moved together by the electro-mechanical actuator to different tracks on the disk surface. The collection of the tracks under all the heads at any given radial position along the disk stack is known as a cylinder. Data read from the sectors by the heads is demodulated in a disk drive interface and provided to a host computer.

In the past, serial or classical disk drive interfaces (such as the ESDI or ST506 interfaces) demodulated the data read from the track on a magnetic disk and provided it in serial form. An additional component, known as a disk drive controller, checked the integrity of the data provided by the serial disk drive interface and converted the serial flow of data into a parallel flow. The parallel information was then provided by the disk drive controller to a host computer.

More recently, disk drive interfaces have been designed with more intelligence than the classical or serial disk drive interfaces. Examples of such intelligent disk drive interfaces are the SCSI and PCAT (which was based on the PC-AT computer design) interfaces. Functionally, these intelligent interfaces and the disk drive controller have become part of the disk drive and provide parallel data to the host computer.

These intelligent interfaces have typically been coupled to the host computer at an input/output (I/O) slot. The I/O slot has, in the past, included a connector, coupled to the host computer, which ranged in size from sixty two pins to ninety eight pins. An edge connector, coupled to the intelligent disk drive, having either sixty two or ninety eight pins depending on the connector coupled to the host computer, was plugged into the I/O connector of the host computer.

However, continuing efforts to reduce the size of both computers and disk drives has led to the development of disk drives which have only a forty pin connector. In order to make these disk drives compatible with host computers that still have the sixty two or ninety eight pin I/O connectors, an adapter board has been developed, which plugs into the I/O connector and converts the host computer system bus for compatibility with the forty pin interface used by the disk drive. A typical adapter board also supports up to two disk drives connected in a master/slave configuration.

Most PC-AT type host computers are programmed to operate with a number of specific disk drive types. The PC-AT type host computer contains a table of disk drive types, which correspond to the drive types with which the host computer will operate. That table contains the number of cylinders, heads and sectors per track for each drive type entered in the table. This table is fixed in a Basic Input/Output System (BIOS) ROM located in the host computer.

A power up program, which is also stored in the BIOS ROM, provides the disk drive controller with the disk drive parameters, from the table, which correspond to the disk drive type with which the host computer is programmed to operate. The disk drive controller then configures itself to match the table entry corresponding to the disk drive parameters provided by the power up program.

However, all disk drive types included in the table in the IBM PC-AT computer use a sector number of seventeen sectors per track. This fixed table imposes a limitation on the maximum disk drive capacity that the host computer can access. In other words, if the host computer cannot command a disk drive to configure itself for more than seventeen sectors per track because of the fixed table in the BIOS ROM, the computer is unable to access the maximum capacity for some high capacity disk drives, which are installed for operation with the host computer. This is an increasing problem with the advances currently being made in enlarging disk capacity.

The computer typically addresses the disk drive through BIOS calls. Presently, typical BIOS programs allow up to one thousand and twenty four cylinders, sixteen heads and sixty four sectors per track to be addressed. Hence, the maximum disk drive capacity addressable by the BIOS is 1,048,576 blocks (536,870,912 bytes). But, if the computer cannot address more than seventeen sectors per track because of the fixed list in the BIOS, the addressable disk drive capacity is cut down to 278,528 blocks (142,606,336 bytes).

IBM Technical Disclosure Bulletin, Vol. 31, No. 1, June 1988, pages 299 to 300, "Automatic Configuration of Memory Options with Fault Bypassing" relates to a BIOS extension which, on initiation of an IBM PC-AT type computer determines the amount of RAM installed in the memory-expansion option board. The information obtained is compared with the existing information stored in an electronically programmable logic device (EPLD) on the memory expansion option board, and a determination is made as to whether the system configuration table of the computer needs to be up-dated. If it is deemed necessary, up-dating the system configuration table takes place.

Electronics and Wireless World, Vol. 95, No. 1643, September 1988, pages 884 to 888, G. Humphrey: "SCSI-Small Computer System Interface", relates to a disk drive having an interface which is capable of correcting errors and handling media defects in a way which is transparent to the system in which the disk drive operates.

According to the present invention, in one aspect, there is provided a disk drive accessing system for retrieving data from and writing data to a disk drive, comprising a system controller having a basic input/output system (BIOS) memory device containing and address parameter table defining a number of cylinders, heads and sectors per track for a plurality of predetermined types of disk drives including an expected type of disk drive and comprising an adapter for coupling the system controller to a respective disk drive, whereby the system controller can access address locations on the disk drive in operation based on the address parameters in the address parameter table corresponding to the expected type of disk drive, and characterised by an instruction device carried by the adapter and configured to cause the system controller to interrogate the respective disk drive and to identify an actual maximum number of cylinders, an actual maximum number of heads and an actual maximum number of sectors of the disk drive and revise the address parameters used by the system controller for accessing the address locations on the disk drive to correspond to the actual maximum number of cylinders, heads and sectors of the disk drive, rather than those of the expected type of disk drive.

According to the present invention, in another aspect, there is provided a method for accessing a disk drive employing a system controller having a basic input/output system (BIOS) memory device containing an address parameter table defining a number of cylinders, heads and sectors per track for a plurality of pre-determined types of disk drives including an expected type of disk drive, wherein the system controller is coupled to the disk drive through an adapter and wherein the system controller determines address parameters for the expected type of disk drive from the address parameter table for use in accessing address locations on the disk drive, characterised by the system controller executing instructions received from an instruction device carried by the adapter, interrogating the disk drive to identify an actual maximum number of cylinders, heads and sectors in the disk drive, and revising the address parameters used by the system controller in accessing the address locations on the disk drive to correspond to the actual maximum number of cylinders, heads and sectors of the disk drive, rather than those of the expected type of disk drive.

Preferably, the present invention takes advantage of a built in feature in a BIOS power up program, which orders a host computer to search for and execute BIOS extensions during a power up sequence. By taking advantage of this built in feature, the present invention may adapt a disk drive accessing system for accessing a storage capacity on at least one disk drive.

An address parameter table corresponding to a pre-determined type of disk may be retrieved and be written to an operations memory device. This address parameter table may be revised based on the address parameters determined for the identified disk drive. The address parameter table may, for example, be revised by replacing the location of the address parameter table in the operations memory device with the location of the determined address parameters.

A data storage system may be provided which comprises: a disk drive having address locations for storing data, a system controller suitable for accessing the address locations on the disk drive to retrieve data from the disk drive and to write data to the disk drive, an adapter for coupling the system controller to the disk drive, and characterised by memory means carried by the adapter for storing instructions for the system controller.

Preferably, the memory means of the above system comprise a BIOS extension memory means including a program sequence for instructing the system controller to identify the disk drive type and to revise accordingly an address parameter table, which corresponds to a pre-determined disk drive type and which is stored in a memory of the system controller.

The system controller may comprise an operational memory for storing instructions for the system controller to be accessed by the system controller during operation. In use, a location of the revised address parameter table may be transferred by the system controller to the operational memory such that the location of the revised address parameter table effectively replaces a location in the operational memory of the address parameter table corresponding to a pre-determined disk drive type.

The present invention is described further, by way of example, with reference to the accompanying drawings, in which:-
Figure 1 is a block diagram of a data storage system;
Figure 2 is a top view of a disk in the data storage system shown in Figure 1;
Figure 3A is a more detailed block diagram of a host computer and adapter of a prior art data storage system;
Figure 3B is a more detailed block diagram of a host computer with adapter of a data storage system according to the present invention; and
Figure 4 is a block diagram of an alternative embodiment of data storage system according to the present invention.

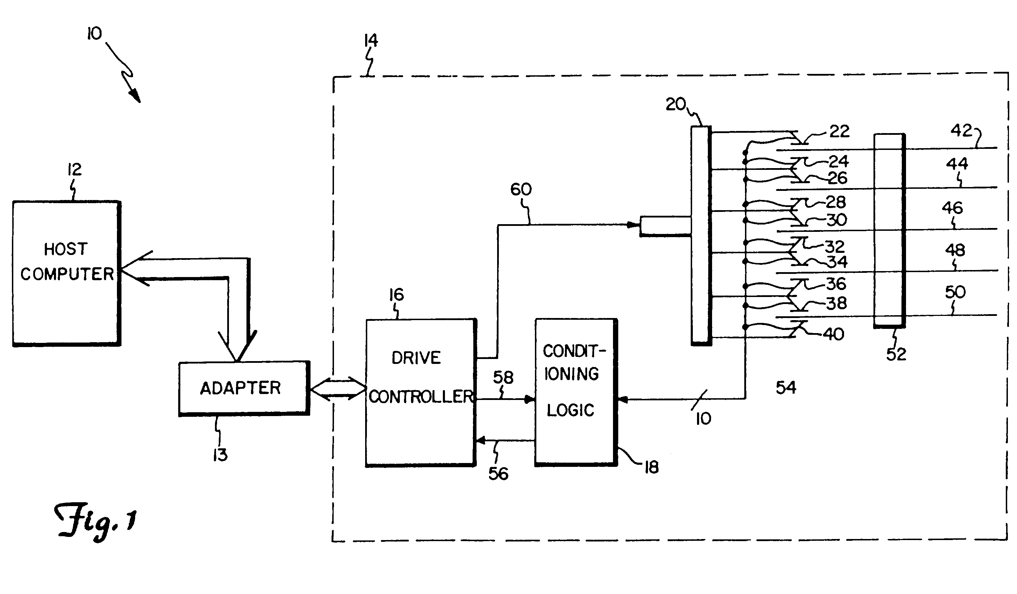

Figure 1 is a block diagram of a hard disk data storage system 10, which includes a host computer 12, an adapter 13 and a disk drive 14. The disk drive 14 includes a disk drive controller 16, conditioning logic 18, a rotary actuator 20, transducers or read/write heads 22, 24, 26, 28, 30, 32, 34, 36, 38 and 40 (heads 22 to 40), magnetic disks 42, 44, 46, 48 and 50 (disks 42 to 50) and a spindle 52. During operation of the disk drive 14, the disks 42 to 50 spin with the spindle 52. The heads 22 to 40 fly above the disks 42 to 50 either reading magnetically encoded data from the surfaces of the disks 42 to 50 or encoding (writing) information on the disk surfaces. While reading information, the heads 22 to 40 produce signals representative of the data on the disk surfaces and provide those signals to the conditioning logic 18. The conditioning logic 18 conditions the signals and provides them in serial form to the drive controller 16. This flow of information from the heads 22 to 40 to the drive controller 1 is indicated by arrows 54 and 56.

The drive controller 16, in turn, converts the serial data received from the conditioning logic 18 into parallel data and provides it to the adapter 13. The adapter 13 adapts the information received from the drive controller 16 for compatibility with a data bus in the host computer 12. The host computer 12 also provides the adapter 13 with control information for the disk drive 14. The adapter 13 adapts the information received from the host computer 12 for compatibility with the drive controller 16. Based on that control information and position error information read from the disks 22 to 40, the drive controller 16 provides control signals to the conditioning logic 18 and the actuator 20. This is indicated by arrows 58 and 60.

The control signals provided by the drive controller 16 to the conditioning logic 18 dictate, for example, the data of which head should be demodulated by the conditioning logic 18 and provided to the drive controller 16. The control signals provided to the actuator 20 cause the actuator 20 to rotate. Rotation of the actuator 20 causes the heads 22 to 40 to move radially with respect to the disks 42 to 50.

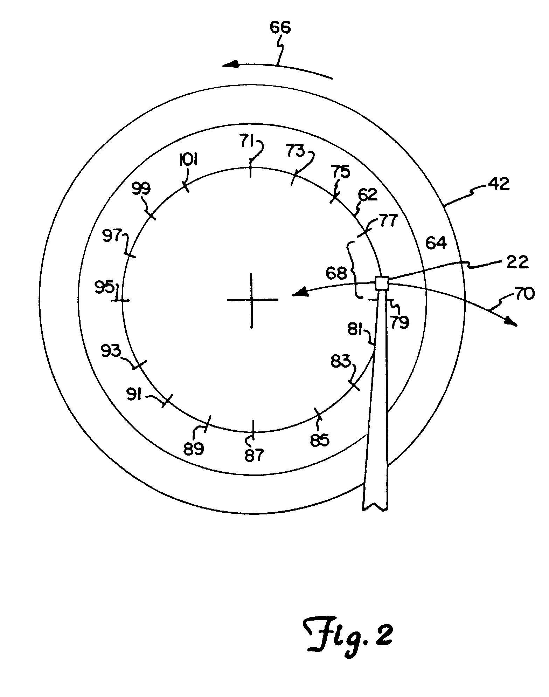

Figure 2 shows a typical disk surface. The surface of the disk 42 contains a plurality of tracks. For clarity, only two tracks, 62 and 64 are shown in Figure 2. Each track on the surface of the disk 42 is divided into sectors. The sector divisions on the track 62 are indicated by the radially oriented lines 71, 73, 75, 77, 79, 81, 83, 85, 87, 89, 91, 93, 95, 97, 99 and 101. The head 22 is positioned over a sector 68 of the track 62 on the disk 42. As the disk 42 rotates in the direction indicated by arrows 66, the head 22 flies above the track 62 and data is read from or written to the track 62.

As the actuator 20 rotates and moves the heads 22 to 40, the head 22 moves radially with respect to the disk 42 along an arc indicated by arrows 70. All the heads are moved together as the actuator 20 rotates. Therefore, the heads 22 to 40 are simultaneously moved over corresponding tracks on each disk as the actuator 20 rotates. The collection of tracks under the heads 22 to 40 at a given radial position is known as a cylinder. Therefore, the number of cylinders and the number of tracks per surface on the disks 42 to 50 is the same. Also, the number of tracks per cylinder is the same as the number of the heads 22 to 40 in the disk drive 14.

An individual data sector on one of the disks 42 to 50 is addressed by its cylinder address, head address and sector number. The term "address" in cylinder address and head address implies a number in a sequence starting with 0. The term "number" in sector number implies a number in a sequence starting with 1. For example, the first sector available in the disk drive 14 is addressed as cylinder 0, head 0 and sector 1. Hence, when the host computer 12 accesses a particular sector or sectors on one of the disks 42 to 50, it specifies to the drive controller 16 the requested sector number, head address and cylinder address. The drive controller 16, in turn, causes the actuator 20 to move the heads 22 to 40 to the correct cylinder. The drive controller 16 also controls the conditioning logic 18 to demodulate information from the correct head.

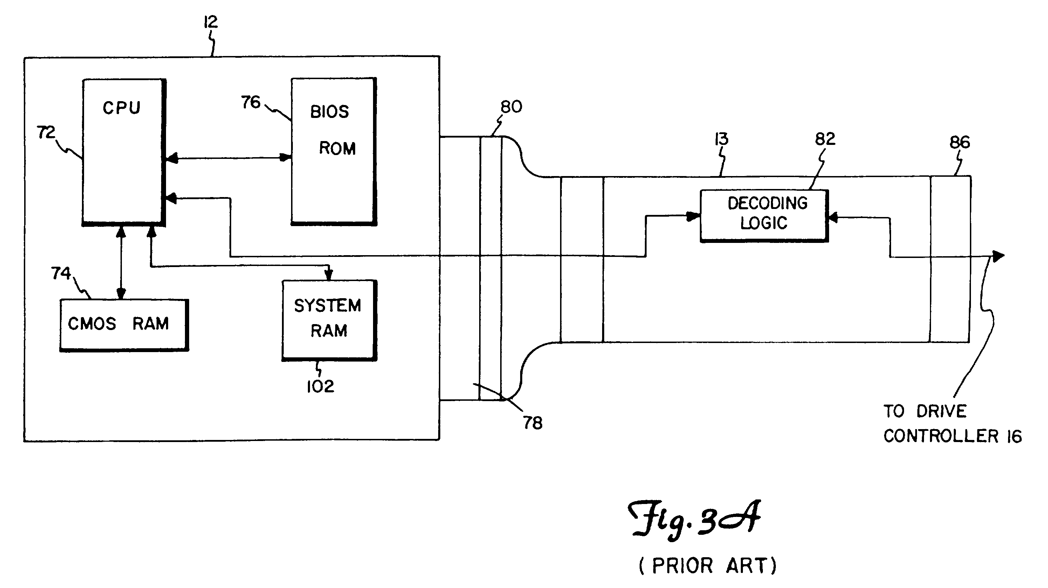

Figure 3A is a more detailed block diagram of the host computer 12 and adapter 13 in the prior art. The host computer 12 includes a CPU 72, a CMOS RAM 74, a BIOS ROM 76, a system RAM 102 and, in this embodiment, a ninety eight pin I/O connector 78. The adapter 13 includes a ninety eight pin edge connector 80, decoding logic 82 and a forty pin connector 86. The decoding logic 82 adapts information sent by either the CPU 72 or the drive controller 16 for compatibility with the ninety eight pin data bus configuration of the host computer 12, or the forty pin data bus configuration of the drive controller 16, respectively.

The host computer 12 is a typical PC-AT type computer. Therefore, it contains a table of disk drive types, which is fixed in the BIOS ROM 76. The table defines the number of cylinders, heads and sectors per track for each drive type in the table. During power up, the CPU 72 accesses the BIOS ROM 76 for power up instructions. A BIOS power up program causes the CPU 72 to retrieve a drive type from the CMOS RAM 74, which allows the CPU 72 to retrieve the appropriate drive parameters from the BIOS ROM 76. The location of the drive parameter table in the BIOS ROM 76 is then stored by the CPU 72 in the system RAM 102. The location of the table is then available to the CPU 72 from the system RAM 102 for as long as the computer remains powered. The drive parameters in the BIOS ROM 76 corresponding to the drive type stored in the CMOS RAM 74, themselves, correspond to the drive type which the host computer 12 expects to be installed. Then, before accessing the disk drive 14, the CPU 72 retrieves the address parameters stored in the BIOS ROM 76 at the location indicated in the system RAM 102 and sends them, via the adapter 13, to the drive controller 16. The drive controller 16 then configures the disk drive 14 for being accessed according to the drive parameters sent by the CPU 72.

However, where the actual physical storage capacity of the disk drive 14 is greater than any of the disk drive types present in the table in the BIOS ROM 76, the host computer 12 is incapable of accessing the entire physical storage capacity of the disk drive 14. Hence, some of the physical storage capacity of the disk drive 14 is wasted.

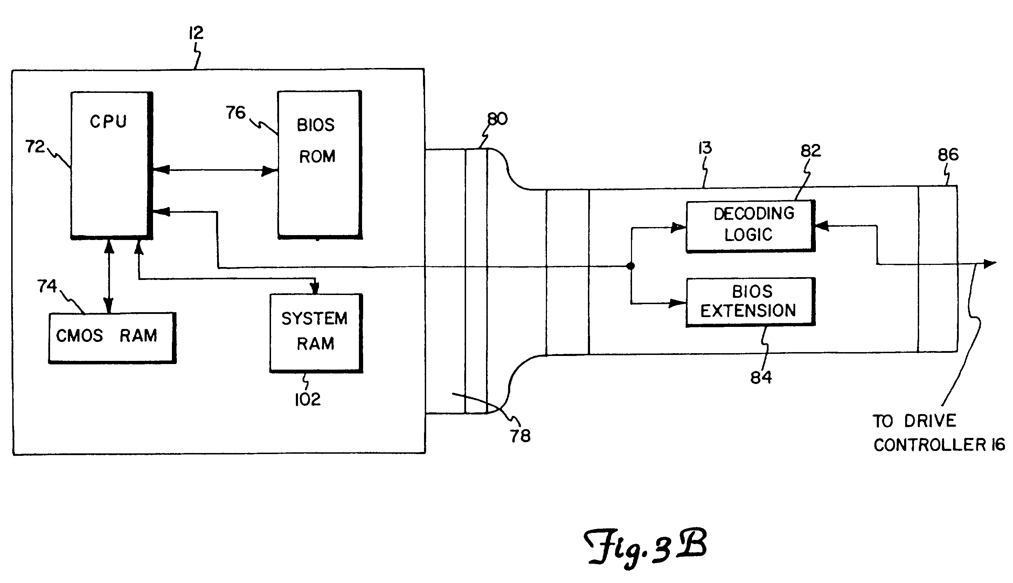

Figure 3B is a block diagram of the host computer 12 and adapter 13 of the present invention. The components of Figure 3B are the same as those shown in Figure 3A except that a BIOS extension 84 is added to the adapter 13.

When the CPU 72 accesses the BIOS ROM 76 during the power up program, one of the operations in the power up sequence is that the CPU 72, after executing the instructions of the BIOS ROM 76, looks for any BIOS extensions which are to be accessed for instructions to be executed during power up. Upon looking for a BIOS extension, the CPU 72 locates the BIOS extension 84.

In this preferred embodiment, the BIOS extension 84 is a programmable read only memory (PROM) containing several instructions. First, the BIOS extension 84 instructs the CPU 72 to interrogate the disk drive 14 and identify its actual type (i.e. its actual physical configuration). This can be done either by retrieving a model number from the drive controller 16 or by retrieving the actual physical capacity of the disk drive 14. Then, the CPU 72 is instructed to determine address parameters, such as the number of cylinders, the number of heads and the number of sectors per track for the disk drive 14. The CPU 72 sends this information to the drive controller 16 which, in turn, configures the disk drive 14 for being accessed.

Also, the BIOS extension 84 instructs the CPU 72 to store the location of the drive parameters for the identified drive, which are tabulated and stored in the BIOS extension 84, into the system RAM 102. Hence, after power up, and during operation of the data storage system 10, the CPU 72 does not need to interrogate the disk drive 14 each time it accesses the disk drive 14. Rather, all of the essential address parameters are stored in the BIOS extension 84 for ready access by the CPU 72.

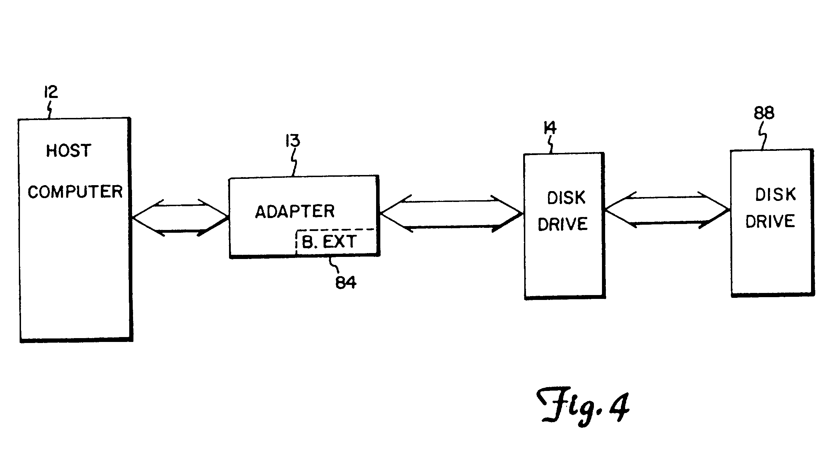

Figure 4 is a block diagram of another embodiment of the present invention. The data storage system shown in Figure 4 is the same as that shown in Figure 1 except that a second disk drive 88 is added to the data storage system. The disk drives 14 and 88 are coupled in a known master/slave relationship. The BIOS extension 84 in the adapter 13 operates in the same way as described with reference to Figure 3B except that it instructs the CPU 72 not only to interrogate and determine drive parameters for the disk drive 14 but also to interrogate and determine drive parameters for the disk drive 88. The location of the drive parameters in the BIOS extension 84, which are appropriate for the drive 88, is stored in the system RAM 102 as well.

The only additional step which must be taken is that the host computer 12 must be initialised to recognise the number of drives attached. However, the type of drive attached and its corresponding address parameters are automatically provided to the CPU 72 by instructions in the BIOS extension 84.

It should be noted that the adapter board 13 is capable of being provided with hardware jumpers to allow the location of the BIOS extension 84 in the system memory to be selectable. This reduces the possibility of conflict with memory space occupied by other BIOS extensions located on other adapters 13.

The present invention allows the entire physical storage capacity of even high capacity disk drives to be utilised by a host computer. By using a BIOS extension to accomplish this, the high capacity disk drives used are automatically integrated into an existing system. This eliminates re-writing the BIOS stored in the BIOS ROM 76 and thereby possibly creating other problems in the operating system of the host computer 12.

Also, by mounting the BIOS extension 84 in the adapter 13, hardware need not be added to mother boards in the host computer 12. This eliminates any re-design or re-layout of the hardware in the host computer 12.

In addition, many customers who contemplate buying high capacity disk drives require that they have a chance to evaluate the disk drives before purchasing them. With the present invention, the adapter 13 can be coupled to any high capacity disk drive and the disk drive can be evaluated with no change whatsoever to the potential customer's system.

Also, the present invention allows future disk drive designs, with even larger capacities, to be automatically integrated with existing host computer systems. No additional programming is required of the BIOS in the BIOS ROM 76 or that in the BIOS extension 84. This allows the full capacity of these disk drives to be used even in systems which lack appropriate drive type tables in the BIOS ROM 76.

## Claims

1. A disk drive accessing system for retrieving data from and writing data to a disk drive, comprising a system controller (12) having a basic input/output system BIOS memory device (76) containing an address parameter table defining a number of cylinders, heads and sectors per track for a plurality of predetermined types of disk drives including an expected type of disk drive and comprising an adapter (13) for coupling the system controller to a respective disk drive, whereby the system controller can access address locations on the disk drive in operation based on the address parameters in the address parameter table corresponding to the expected type of disk drive, and characterised by an instruction device (84) carried by the adapter and configured to cause the system controller to interrogate the respective disk drive, identify an actual maximum number of cylinders, an actual maximum number of heads and an actual maximum number of sectors of the disk drive and revise the address parameters used by the system controller for accessing the address locations on the disk drive to correspond to the actual maximum number of cylinders, heads and sectors of the disk drive, rather than those of the expected type of disk drive.

2. A system according to claim 1 characterised in that the system controller (12) comprises an operational memory (102) for storing instructions for access during operation, the operational memory including a location for the address parameter table, and in that the instruction device is arranged to replace the location for the address parameter table with a location for address parameters for the respective disk drive for revising the address parameters.

3. A system according to claim 1 or 2 characterised in that the BIOS memory device (76) includes a power up routine and in that the instruction device is arranged to cause the system controller (12) to interrogate the respective disk drive and to revise the address parameters during execution of the power up routine.

4. A system according to any of claims 1 to 3 characterised in that the instruction device is configured to cause the system controller (12) to interrogate each of a plurality of respective disk drives and to identify actual maximum number of cylinders, heads and sectors corresponding to each of the plurality of respective disk drives interrogated whereby the address locations on each of the plurality of respective disk drives are accessible by the system controller (12) during operation.

5. A system according to any preceding claim characterised in that the instruction device comprises a BIOS extension memory device.

6. A method for accessing a disk drive employing a system controller (12) having a basic input/output system BIOS memory device (76) containing an address parameter table defining a number of cylinders, heads and sectors per track for a plurality of pre-determined types of disk drives including an expected type of disk drive, wherein the system controller is coupled to the disk drive through an adapter and wherein the system controller determines address parameters for the expected type of disk drive from the address parameter table for use in accessing address locations on the disk drive, characterised by the system controller executing instructions received from an instruction device carried by the adapter, interrogating the disk drive to identify an actual maximum number of cylinders, heads and sectors in the disk drive, and revising the address parameters used by the system controller in accessing the address locations on the disk drive to correspond to the actual maximum number of cylinders, heads and sectors of the disk drive, rather than those of the expected type of disk drive.

7. A method according claim 6 characterised in that the steps of identifying and revising are performed during a power up sequence.

## Patentansprüche

1. Zugriffssystem für ein Plattenlaufwerk zum Wiedergewinnen von Daten von einem Plattenlaufwerk und zum Schreiben von Daten auf das Plattenlaufwerk, mit einem System-Steuergerät (12), das eine grundlegende Eingangs-/Ausgangs-System-BIOS-Speichereinrichtung (76) aufweist, die eine Adressenparametertabelle enthält, die eine Anzahl von Zylindern, Köpfen und Sektoren pro Spur für eine Vielzahl von vorgegebenen Typen von Plattenlaufwerken unter Einschluß eines erwarteten Typs eines Plattenlaufwerks definiert, und mit einem Adapter (13) zum Koppeln des System-Steuergerätes mit einem jeweiligen Plattenlaufwerk, wodurch das System-Steuergerät einen Zugriff auf Adressenplätze auf dem Plattenlaufwerk im Betrieb auf der Grundlage der Adressenparameter in der Adressenparametertabelle ausführen kann, die dem erwarteten Typ des Plattenlaufwerks entspricht,
gekennzeichnet durch eine Befehlseinrichtung (84), die auf dem Adapter angeordnet und so konfiguriert ist, daß sie bewirkt, daß das System-Steuergerät das jeweilige Plattenlaufwerk abfragt, eine aktuelle maximale Anzahl von Zylindern, eine aktuelle maximale Anzahl von Köpfen und eine aktuelle maximale Anzahl von Sektoren des Plattenlaufwerks identifiziert und die von dem System-Steuergerät verwendeten Adressenparameter für einen Zugriff auf die Adressenplätze auf dem Plattenlaufwerk so ändert, daß sie der aktuellen maximalen Anzahl von Zylindern, Köpfen und Sektoren des Plattenlaufwerks und nicht denen des erwarteten Typs des Plattenlaufwerks entsprechen.

2. System nach Anspruch 1,
dadurch gekennzeichnet, daß das System-Steuergerät (12) einen Arbeitsspeicher (102) zum Speichern von Befehlen für einen Zugriff im Betrieb aufweist, daß der Arbeitsspeicher einen Platz für die Adressenparametertabelle einschließt, und daß die Befehlseinrichtung so angeordnet ist, daß sie den Platz für die Adressenparametertabelle durch einen Platz für Adressenparameter für das jeweilige Plattenlaufwerk zur Änderung der Adressenparameter ersetzt.

3. System nach Anspruch 1 oder 2,
dadurch gekennzeichnet, daß die BIOS-Speichereinrichtung (76) eine Einschaltroutine einschließt, und daß die Befehlseinrichtung so ausgebildet ist, daß sie eine Abfrage des jeweiligen Plattenlaufwerks und eine Änderung der Adressenparameter durch das System-Steuergerät (12) beim Ausführen der Einschaltroutine hervorruft.

4. System nach einem der Ansprüche 1 bis 3,
dadurch gekennzeichnet, daß die Befehlseinrichtung so konfiguriert ist, daß sie eine Abfrage jedes einer Vielzahl von jeweiligen Plattenlaufwerken durch das System-Steuergerät (12) zur Identifikation der aktuellen maximalen Anzahl von Zylindern, Köpfen und Sektoren hervorruft, die jedem der Vielzahl von jeweiligen Plattenlaufwerken entsprechen, die abgefragt werden, so daß das System-Steuergerät (12) im Betrieb einen Zugriff auf die Adressenplätze auf jedem der Vielzahl von jeweiligen Plattenlaufwerken ausführen kann.

5. System nach einem der vorhergehenden Ansprüche,
dadurch gekennzeichnet, daß die Befehlseinrichtung eine BIOS-Erweiterungsspeichereinrichtung umfaßt.

6. Zugriffsverfahren für den Zugriff auf ein Plattenlaufwerk unter Verwendung eines System-Steuergerätes (12) mit einer grundlegenden Eingangs-/Ausgangs-System-BIOS-Speichereinrichtung (76), die eine Adressenparametertabelle enthält, die eine Anzahl von Zylindern, Köpfen und Sektoren pro Spur für eine Vielzahl von vorgegebenen Typen von Plattenlaufwerken unter Einschluß eines erwarteten Typs eines Plattenlaufwerks enthält, wobei das System-Steuergerät mit dem Plattenlaufwerk über einen Adapter gekoppelt ist und bei dem das System-Steuergerät Adressenparameter für den erwarteten Typ von Plattenlaufwerk aus der Adressenparametertabelle zur Verwendung beim Zgriff auf Adressenplätze auf dem Plattenlaufwerk bestimmt,
dadurch gekennzeichnet, daß das System-Steuergerät von einer von dem Adapter getragenen Befehlseinrichtung empfangene Befehle ausführt, das Plattenlaufwerk abfragt, um eine aktuelle maximale Anzahl von Zylindern, Köpfen und Sektoren des Plattenlaufwerks abzufragen und die von dem System-Steuergerät beim Zugriff auf die Adressenplätze auf dem Plattenlaufwerk verwendeten Adressenparameter so ändert, daß sie der aktuellen maximalen Anzahl von Zylindern, Köpfen und Sektoren des Plattenlaufwerkes und nicht denen des erwarteten Typs des Plattenlaufwerks entsprechen.

7. Verfahren nach Anspruch 6,
dadurch gekennzeichnet, daß die Schritte der Identifikation und Änderung während einer Einschaltfolge ausgeführt werden.

## Revendications

1. Système d'accès pour unité de disque conçu pour récupérer et inscrire des données sur une unité de disque, comprenant un contrôleur de système (12) équipé d'une unité de mémorisation (76) pourvue d'un système de base de gestion des entrées/sorties (BIOS) contenant un répertoire des paramètres d'adressage définissant un nombre de cylindres, de têtes et de secteurs par piste pour une pluralité de types prédéterminés d'unités de disques y compris un type attendu d'unité de disque et comprenant un adaptateur (13) conçu pour relier le contrôleur de système à une unité de disque respective, par lequel le contrôleur de système peut accéder aux emplacements des adresses sur l'unité de disque en cours de fonctionnement sur la base des paramètres d'adressage du répertoire des paramètres d'adressage correspondant au type attendu d'unité de disque, et caractérisé par le fait qu'une unité d'instruction (84) soutenue par l'adaptateur et configurée de façon à ce que le contrôleur de système interroge l'unité de disque respective, identifie un nombre maximum réel de cylindres, un nombre maximum réel de têtes et un nombre maximum réel de secteurs de l'unité de disque et révise les paramètres d'adressage utilisés par le contrôleur de système pour accéder aux emplacements des adresses sur l'unité de disque afin de correspondre au nombre maximum réel de cylindres, de têtes et de secteurs de l'unité de disque, plutôt qu'à ceux du type attendu d'unité de disque.

2. Système conforme à la revendication 1, caractérisé par le fait que le contrôleur de système (12) comprend une mémoire opérationnelle (102) conçue pour mémoriser des instructions d'accès pendant le fonctionnement, la mémoire opérationnelle comprenant un emplacement pour le répertoire des paramètres d'adressage, et par le fait que l'unité d'instruction est conçue pour remplacer l'emplacement du répertoire des paramètres d'adressage par un emplacement pour les paramètres d'adressage de l'unité de disque respective afin de réviser les paramètres d'adressage

3. Système conforme à la revendication ou 2, caractérisé par le fait que l'unité de mémorisation BIOS (76) comprend un sous-programme de mise en route et par le fait que l'unité d'instruction est conçue de façon à ce que le contrôleur de système (12) interroge l'unité de disque respective et révise les paramètres d'adressage pendant l'exécution du sous-programme de mise en route.

4. Système conforme à l'une quelconque des revendications 1 à 3, caractérisé par le fait que l'unité d'instruction est configurée de façon à ce que le contrôleur de système (12) interroge chacune des unités d'une pluralité d'unités de disque respectives et identifie le nombre maximum réel de cylindres, de têtes et de secteurs correspondant à chacune des unités d'une pluralité d'unités de disque respectives interrogées, dans lequel le contrôleur du système (12) peut accéder aux emplacements des adresses de chacune des unités d'une pluralité d'unités de disque respectives pendant le fonctionnement.

5. Système conforme à l'une quelconque des revendications précédentes, caractérisé par le fait que l'unité d'instruction comprend une unité de mémorisation à extension BIOS.

6. Méthode d'accès à une unité de disque utilisant un contrôleur de système (12) équipé d'une unité de mémorisation (76) pourvue d'un système de base de gestion des entrées/sorties (BIOS) contenant un répertoire des paramètres d'adressage définissant un nombre de cylindres, de têtes et de secteurs par piste pour une pluralité de types prédéterminés d'unités de disques y compris un type attendu d'unité de disque, dans lequel le contrôleur de système est relié à l'unité de disque par l'intermédiaire d'un adaptateur et dans lequel le contrôleur de système détermine les paramètres d'adressage pour le type attendu d'unité de disque à partir du répertoire des paramètres d'adressage à utiliser pour accéder aux emplacements des adresses sur l'unité de disque, caractérisée par le fait que le contrôleur de système exécute les instructions reçues d'une unité d'instruction soutenue par l'adaptateur, interroge l'unité de disque afin d'identifier un nombre maximum réel de cylindres, de têtes et de secteurs dans l'unité de disque, et révise les paramètres d'adressage utilisés par le contrôleur de système lors de l'accès aux emplacements des adresses sur l'unité de disque afin de correspondre au nombre maximum réel de cylindres, de têtes et de secteurs de l'unité de disque, plutôt qu'à ceux du type attendu d'unité de disque.

7. Méthode conforme à la revendication 6, caractérisée par le fait que les étapes d'identification et de révision sont réalisées lors d'une opération de mise en route.
